# EUROPEAN PATENT SPECIFICATION

(11) **EP 2 903 776 B1**
(45) Date of publication and mention of the grant of the patent: **30.12.2020**
(21) Application number: 13843647.2
(22) Date of filing: 01.10.2013
(51) Int. Cl.: B23K 26/00, B23K 26/06, C22F 1/18, C21D 10/00, G01M 7/08, B23K 101/00, B23K 26/356

(54) **METHODS FOR TESTING LASER SHOCK PEENING**
VERFAHREN ZUM TESTEN VON LASERSCHOCKSTRAHLEN
PROCÉDÉS D'ESSAI DE MARTELAGE PAR CHOC LASER

(30) Priority: 01.10.2012 US 201261708319 P
(43) Date of publication of application: 12.08.2015
(73) Proprietor: United Technologies Corporation, Farmington, CT 06032 (US)
(72) Inventor: DUESLER, Paul, W., Manchester, CT 06040 (US); FILEWICH, Paul, Salem, CT 06420 (US)
(74) Representative: Dehns
(86) International application number: PCT/US2013/062895
(87) International publication number: WO 2014/055538

(56) References cited:
- US-A1- 2003 062 349
- US-A1- 2010 051 141
- US-B1- 6 479 790
- US-B2- 8 145 454
- J RUSCHAU ET AL: "Fatigue crack nucleation and growth rate behavior of laser shock peened titanium", INTERNATIONAL JOURNAL OF FATIGUE, vol. 21, 1 September 1999 (1999-09-01), pages 199-209, XP055213428, ISSN: 0142-1123, DOI: 10.1016/S0142-1123(99)00072-9
- ZHANG Y K ET AL: "Effect of laser shock processing on the mechanical properties and fatigue lives of the turbojet engine blades manufactured by LY2 aluminum alloy", MATERIALS AND DESIGN, LONDON, GB, vol. 30, no. 5, 19 July 2008 (2008-07-19), pages 1697-1703, XP025958140, ISSN: 0261-3069, DOI: 10.1016/J.MATDES.2008.07.017 [retrieved on 2008-07-19]

## Description

### BACKGROUND

### Technical Field:

This disclosure relates generally to turbo-machinery rotor components which may form stress risers during operation. More specifically, this disclosure relates to turbo-machinery rotor components enhanced by laser shock peening and testing of the effectiveness of such laser shock peening.

### Description of the Related Art:

Turbo-machinery such as gas turbine engines and, in particular, aircraft gas turbine engines include compressors with rotors and rotor blades that operate at high rotational speeds that subject the rotor and rotor blades to very high stress fields. These rotor and rotor blades are designed to operate in high stress fields and often contain features that are stress risers which subject the components to fatigue failure and reduced operating life.

It is expensive to refurbish and/or replace rotors and rotor blades in a gas turbine engine and, therefore, any means to increase rotor and rotor blade life is very desirable. Therefore, it is highly desirable to design and construct longer lasting rotor and rotor blade components that are better able to resist both low and high cycle fatigue than present rotor and rotor blade components.

Laser shock peening (LSP) or laser peening generally increases the resistance of metals and alloys to fatigue. LSP does this by using a high energy pulsed laser to produce residual compressive stresses into the surface of a part treated with LSP. The residual compressive stresses from LSP extend deeper below the surface than those from shot peening, usually resulting in a significantly greater benefit in fatigue resistance after laser peening. LSP has been used to improve fatigue capability in compressor rotors and rotor blades as disclosed in U.S. Patent No. 6,541,733.

Testing the effects of LSP and other material property improvement processes on various parts, such as compressor rotor blades, can be expensive as a single part may need to be tested at numerous places and at numerous depths. Often, multiple parts must be sacrificed to complete the testing, especially for components where reliability is critical, such as rotor blades for compressors of gas turbine engines, such as aircraft engines. Hence, methods for efficient but thorough testing of rotor blades are needed.

Document 'Fatigue crack nucleation and growth rate behavior of laser shock peened titanium' by J RUSCHAU ET AL discloses laser shock peening (LSP) for metallic materials and study of crack growth rate, US 2003/062349 A1 discloses laser shock peening quality assurance by acoustic analysis, and document 'Effect of laser shock processing on the mechanical properties and fatigue lives of turbojet engine blades manufactured by LY2 aluminum alloy' by ZHANG Y K ET AL discloses analyzing the effects of laser shock processing on residual stresses and micro-hardness of turbojet engine blades manufactured by LY2 aluminum alloys.

### SUMMARY OF THE DISCLOSURE

In accordance with the invention, there is provided a method for testing a leading or trailing edge of a rotor blade as set forth in claim 1.

In the method described above, the HCF test may be performed for at least 10 million cycles, 100 million cycles, a billion cycles or more, depending upon the part being tested and the requirements for the part.

In any one of the methods described above, the blade is a rotor blade of a compressor of a gas turbine engine. The compressor may be a high pressure compressor or a low pressure compressor.

Other advantages and features will be apparent from the following detailed description when read in conjunction with the attached drawings.

### BRIEF DESCRIPTION OF THE DRAWINGS

For a more complete understanding of the disclosed methods and apparatuses, reference should be made to the embodiment illustrated in greater detail on the accompanying drawings, wherein:
FIG. 1 is an illustration of a rotor blade illustrating the placement of the first, second and third notches of the disclosed method as well as an indication of the depth of a LSP material property improvement process.
FIG. 2 is a flow diagram illustrating a disclosed method.

It should be understood that the drawings are not necessarily to scale and that the disclosed embodiments are sometimes illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular embodiments illustrated herein.

### DETAILED DESCRIPTION OF THE PRESENTLY PREFERRED EMBODIMENTS

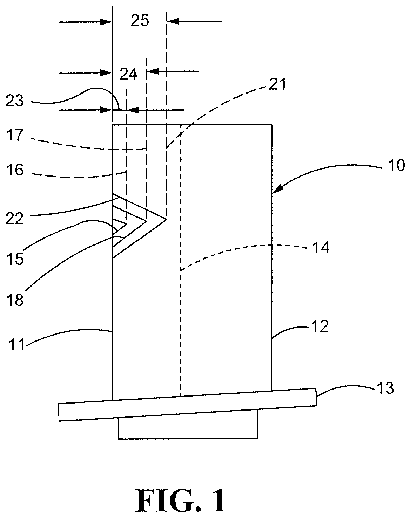

Turning to FIG. 1, a rotor blade 10 is shown with a pair of opposing side edges 11, 12 and that is connected to a base 13 which, in turn, connects the blade 10 to a rotor (not shown). The blade 10 has been exposed to a material property improvement process that may be a LSP process. Other material improvement processes are available as will be apparent to those skilled in the art. In such a LSP process, the edge 11 is covered with a material that is opaque to laser energy. Typically, such opaque material is in the form of black tape or paint and its purpose is to absorb energy. A transparent material is placed on top of the opaque material which, in many cases, may simply be a layer or a flow of water. The laser may be a high energy, pulsed neodymium-glass laser that produces pulses of short durations, from about 15 to about 30 nanoseconds. Such a laser may have a wave length of about 1.06 microns and with an energy per pulse of about 50 joules or more. Other lasers may be used as will be apparent to those skilled in the art.

The laser beam may be directed from the laser through an optical chain of mirrors and lenses onto the edge 11 of the blade 10. When the laser beam is directed at the edge 11, it passes through the transparent overlay and strikes the opaque overlay. When the beam strikes the surface of the opaque overlay, it immediately vaporizes a thin surface layer of the opaque overlay. This vapor then absorbs incoming laser energy, heats rapidly and expands against the edge 11 of the blade 10 as well as the transparent overlay. The transparent overlay overlaps the thermally expanding vapor and plasma against the edge 11 of the blade 10 and consequently causes the pressure to rise much higher than it would if the transparent overlay (e.g. water) were absent. Then, a sudden, high pressure against the edge 11 of the blade 10 causes a shock wave to propagate into the blade 10. When the peak stress of the shock wave is above the dynamic yield strength of the material of the blade 10, the material of the blade 10 yields and plastically deforms. As the stress wave propagates deeper into the blade 10, the peak stress of the wave decreases, but deformation of the material of the blade 10 continues until the peak stress falls below the dynamic yield strength. This plastic deformation caused by the shock wave gives rise to strain material property improvement and compressive residual stresses in the blade 10. As shown in FIG. 1, the depth of the strain material property improvement in the blade 10 caused by the LSP is indicated schematically by the phantom line 14. Disclosed herein is a method of testing the effectiveness of the LSP process described above and similar processes that may be carried out on parts like the rotor blade 10.

After the LSP process is carried out to an effective depth indicated at 14 in FIG. 1, a first notch 15 is imparted into the edge of the blade 11 by any of a variety of methods, as will be apparent to those skilled in the art. Material damaged by the creation of the notch may be removed thereby creating the first notch 15. After the first notch 15 is created, a high cycle fatigue (HCF) test is conducted for a predetermined number of cycles or until a failure occurs. If a failure occurs, the material property improvement parameters used to harden the blade 10 may be modified or the tested capability level may be accepted.

If a failure does not occur at the first notch 15 before a predetermined number of cycles have been carried out, a second notch 18 at a second depth 17 may be created in the blade 10 by any number of conventional means, with the damaged blade material being removed to form the notch 18. After the creation of the second notch 18, another HCF test is carried out for a predetermined number of cycles or until a failure occurs. If a failure occurs, the parameters used for the material property improvement process may be modified or the tested capability level may be accepted. If a failure does not occur, a third notch 22 may be created at a third depth indicated at 21 in FIG. 1. Damaged material is removed by conventional means thereby creating a third notch 22. Then, another HCF test may be carried out for a predetermined number of cycles or until a failure occurs. If a failure occurs, the material property improvement parameters (or the LSP parameters) may be modified or the tested capability level may be accepted.

A single laser is used for the material property improvement process, which may be a LSP process. The laser is also used for the creation of the notches 15, 18 and 22, but in embodiments not being part of the present invention, the notches may be created in any number of different ways using tools other than lasers. Alternatively, different lasers for the material property improvement process and for the creation of the notches 15, 18 and 22 may also be utilized. Further, the HCF test may be performed for more than 10 million cycles, such as 100 million cycles or a billion cycles or more. Further, the effective depth of the material property improvement process or the LSP process, if utilized, may be deeper than the notches 15, 18 and 22 as shown by the phantom line 14 in FIG. 1.

The first notch 15 has a first depth 23, that may be referred to as a start notch depth. If the blade 10 fails the HCF test with only a first notch 15 disposed in the edge 11 of the blade 10, then the material property improvement process may be modified or the test performance may be accepted. The depth 24 of the second notch 18 may be the required depth, meaning that the blade 10 is intended to function despite having a notch 18 of a depth 24 disposed in the edge 11 of the blade 10. Thus, if the blade 10 fails the HCF test with the second notch 18 disposed in the edge 11, the parameters of the material property improvement or the LSP process may be modified or accepted. The depth 25 of the third notch 22 may be referred to as the failure depth. The blade 10 may fail the HCF test with a notch the size of the notch 22 in the edge 11. Regardless, if the blade 10 passes the HCF test with a notch the size of the notch 22 in the edge 11, the parameters used for the material property improvement or the LSP process may or may not require modification.

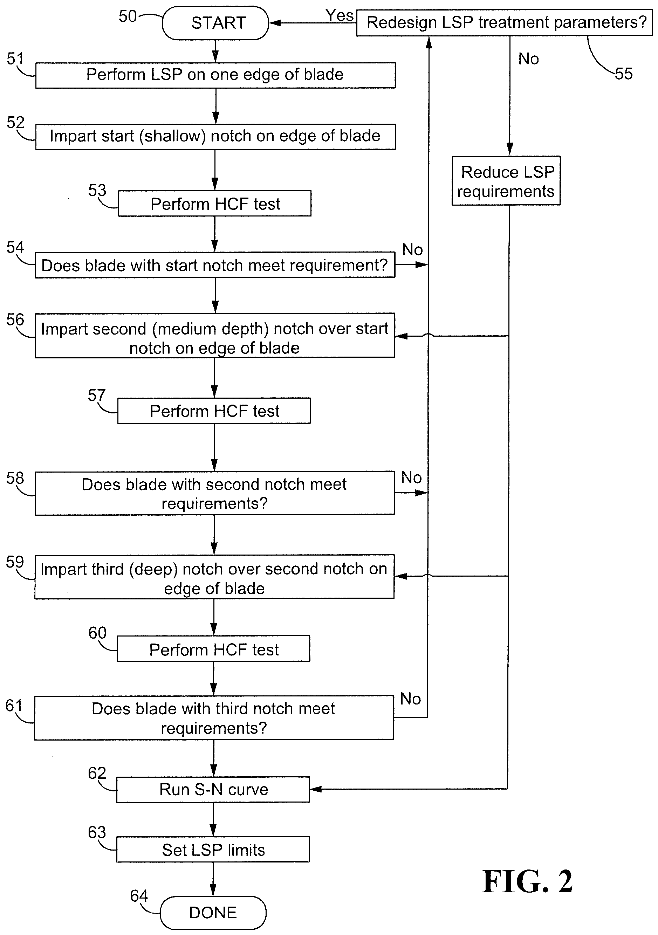

Turning to FIG. 2, one disclosed method for testing the effectiveness of laser shock peening is shown. The method may start at 50 where, at part 51, a LSP process is performed on one edge 11 of the blade 10 to an effective depth indicated at 14 in FIG. 1. Returning to FIG. 2, at part 52, a shallow notch 15 is placed in the edge 11 of the blade 10. Material damaged by the creation of the notch may be removed by conventional means for purposes of forming the notch 15. Then, at part 53, a HCF test may be performed. If the blade 10 does not meet predetermined requirements at part 54, the material property improvement parameters (or the LSP treatment parameters) may be modified at part 55 or accepted at part 54. A second notch 18 may be imparted into the edge 11 of the blade 10 at part 56. Again, damaged material may be removed by conventional means. Then, another HCF test may be performed at part 57 and, if the blade 10 does not meet the predetermined requirements at part 58, the treatment parameters may be changed at part 55 as shown in FIG. 2 or accepted at part 58. A third notch 22 may be imparted into the edge 11 of the blade 10 at part 59 and another HCF test may be performed at part 60. Because the third notch 22 extends to a failure depth 25 (FIG. 1), the material property improvement treatment parameters may not need to be modified at part 55 if the blade 10 with the third notch 22 disposed therein fails the HCF test at part 60. However, the parameters may be optionally modified. If the blade does meet the predetermined requirements at part 61, a S-N curve may be prepared at part 62 and the material property improvement parameters (or LSP parameters) or limits may be set at part 63. The method may be completed at part 64.

In the example shown, only three notches 15, 18, 22 are created. Obviously, this number can vary and anywhere from a single notch to several or more notches may be created and tested, depending on the part, its size and its use. Further, as will be apparent to those skilled in the art, material property improvement processes other than LSP may be utilized.

### INDUSTRIAL APPLICABILITY

Methods are disclosed for evaluating material property improvement procedures carried out on metallic parts, such as rotor blades. For example, methods of evaluating laser shock peening procedures carried out on turbine and compressor rotor blades of gas turbine engines are disclosed. After the material property improvement or LSP process is carried out on a rotor blade, a series of increasingly larger notches are imparted into the edge of the rotor blade. After each notch is formed, a high cycle fatigue test may be carried out to ensure that the rotor blade is safe or has sufficient endurance limit or fatigue strength notwithstanding the presence of a notch along one of its edges. The notches may become increasingly larger until a notch that is large enough to cause an expected failure of the rotor blade is created. After the high cycle fatigue test is carried out after each notch, any failure may resolve in modification of the parameters of the material property improvement (e.g., LSP) process. Thus, the disclosed method provides a means for improving material property improvement processes such as laser shock peening processes and provides a means for evaluating the extent at which a blade may be damaged before it should be replaced. As shown above, a shallow notch, such as a start notch would normally not require the blade to be replaced. However, a notch reaching a failure depth would normally require the blade to be replaced.

## Claims

1. A method for testing a leading or trailing edge (11) of a rotor blade (10), the method comprising:
providing a single laser beam;
providing a blade (10) with an edge (11) to be tested and that has been subjected to a material property improvement process, the material property improvement process being carried out with a first set of parameters using the single laser beam;
covering the edge (11) with an opaque material, which is opaque to the single laser beam;
placing a transparent material, that is transparent to the single laser beam, on top of the opaque material;
pulsing the single laser beam at a location on the edge (11) of the blade (10) at a first energy for a first pulse period to cause a shock wave to penetrate the edge (11) of the blade (10) to a first depth (16), wherein the single laser beam passes through the transparent material and strikes the opaque material;
removing material damaged by the single laser beam to the first depth (16) thereby creating a first notch (15) in the edge (11) of the blade (10);
performing a high cycle fatigue test for at least 10⁶ cycles or until failure occurs;
if failure occurs before a first predetermined number of cycles have been carried out, modifying the first set of parameters;
if failure does not occur before the first predetermined number of cycles has been carried out, pulsing the single laser beam at the first notch (15) and at a second energy for a second pulse period to cause a shock wave to penetrate the edge of the blade at the first notch (15) to a second depth (17);
removing material damaged by the single laser beam to the second depth (17) thereby creating a second notch (18) in the edge (11) of the blade (10);
performing a high cycle fatigue test for at least 10⁶ cycles or until failure occurs;
if failure occurs, modify the first set of parameters;
if failure does not occur, pulsing the single laser beam at the second notch (18) and at a third energy for a third pulse period to cause a shock wave to penetrate the edge (11) of the blade (10) at the second notch (18) to a third depth (21);
removing material damaged by the single laser beam to the third depth (21) thereby creating a third notch (22) in the edge (11) of the blade (10);
performing a high cycle fatigue test for at least 10⁶ cycles or until failure occurs;
if failure occurs, modify the first set of parameters.

2. The method of claim 1 wherein the material property improvement process is a laser shock peening process that produces one or more shock waves that extend to a fourth depth (14) from the edge (11) into the blade (10), and the third depth (21) is shallower than the fourth depth.

3. The method of claim 1 or 2 wherein the blade (10) is a rotor blade of a turbine of a gas turbine engine.

4. The method of claim 1 or 2 wherein the blade (10) is a rotor blade of a compressor of a gas turbine engine.

5. The method of claim 1 or 2 wherein the material property improvement process is a laser shock peening process further comprising:
if failure does not occur before the first predetermined number of cycles has been carried out, coating the edge and the first notch (15) with material that is transparent to the single laser beam;
if failure does not occur, coating the edge (11) and the second notch (18) with material that is transparent to the single laser beam; and
if failure does not occur, create an S-N curve, wherein the second depth (17) is deeper than the first depth (16) and the third depth (21) is deeper than the second depth (17).

6. The method of claim 5 wherein the high cycle fatigue tests are performed for at least 10⁷ cycles.

7. The method of claim 5 wherein the high cycle fatigue tests are performed for about 10⁸ cycles.

8. The method of claim 5 wherein the laser shock peening process produces one or more shock waves that extend to a fourth depth (14) into the blade (10), and the third depth (21) is shallower than the fourth depth (14).

9. The method of claim 5 wherein the first, second and third energies are about equal.

10. The method of claim 5 wherein the first, second and third pulse periods are about equal.

11. The method of claim 5 wherein the first, second and third energies are different.

12. The method of claim 5 wherein the first, second and third pulse periods are different.

13. The method of claim 5 wherein the single laser beam used for the laser shock peening process and the single laser beam used to create the first, second and third notches (15, 18, 22) are the same.

## Patentansprüche

1. Verfahren zum Testen einer Vorder- oder Hinterkante (11) einer Rotorschaufel (10), wobei das Verfahren Folgendes umfasst:
Bereitstellen eines einzigen Laserstrahls;
Bereitstellen einer Schaufel (10) mit einer Kante (11), die getestet werden soll und die einem Materialeigenschaftsverbesserungsprozess unterzogen worden ist, wobei der Materialeigenschaftsverbesserungsprozess mit einem ersten Satz von Parametern unter Verwendung des einzigen Laserstrahls ausgeführt wird;
Beschichten der Kante (11) mit einem undurchlässigen Material, das gegenüber dem einzigen Laserstrahl undurchlässig ist;
Platzieren eines durchlässigen Materials, das gegenüber dem einzigen Laserstrahl durchlässig ist, auf dem undurchlässigen Material;
Pulsierenlassen des einzigen Laserstrahls an einer Stelle an der Kante (11) der Schaufel (10) mit einer ersten Energie für einen ersten Impulszeitraum, um eine Schockwelle hervorzurufen, um die Kante (11) der Schaufel (10) bis zu einer ersten Tiefe (16) zu durchdringen, wobei der einzige Laserstrahl durch das durchlässige Material passiert und auf dem undurchlässigen Material auftrifft;
Entfernen von Material, das durch den einzigen Laserstrahl beschädigt wurde, bis zu der ersten Tiefe (16), wodurch eine erste Einkerbung (15) in der Kante (11) der Schaufel (10) erzeugt wird;
Durchführen eines ersten Tests der hochzyklischen Ermüdung für zumindest 10⁶ Zyklen oder bis eine Ermüdung eintritt;
wenn die Ermüdung eintritt, bevor eine ersten vorbestimmte Anzahl an Zyklen ausgeführt wurde, Modifizieren des ersten Satzes von Parametern;
wenn keine Ermüdung eintritt, bevor eine ersten vorbestimmte Anzahl an Zyklen ausgeführt wurde, Pulsierenlassen des einzigen Lasterstrahls an der ersten Einkerbung (15) und mit einer zweiten Energie für einen zweiten Impulszeitraum, um eine Schockwelle hervorzurufen, um die Kante der Schaufel an der ersten Einkerbung (15) bis zu einer zweiten Tiefe (17) zu durchdringen;
Entfernen des Materials, das durch den einzigen Laserstrahl beschädigt wurde, bis zu der zweiten Tiefe (17), wodurch eine zweite Einkerbung (18) in der Kante (11) der Schaufel (10) erzeugt wird;
Durchführen eines Tests der hochzyklischen Ermüdung für zumindest 10⁶ Zyklen oder bis eine Ermüdung eintritt;
wenn die Ermüdung eintritt, Modifizieren des ersten Satzes von Parametern;
wenn keine Ermüdung eintritt, Pulsierenlassen des einzigen Lasterstrahls an der zweiten Einkerbung (18) und mit einer dritten Energie für einen dritten Impulszeitraum, um eine Schockwelle hervorzurufen, um die Kante (11) der Schaufel (10) an der zweiten Einkerbung (18) bis zu einer dritten Tiefe (21) zu durchdringen;
Entfernen von Material, das durch den einzigen Laserstrahl beschädigt wurde, bis zu der dritten Tiefe (21), wodurch eine dritte Einkerbung (22) in der Kante (11) der Schaufel (10) erzeugt wird;
Durchführen eines Tests der hochzyklischen Ermüdung für zumindest 10⁶ Zyklen oder bis eine Ermüdung eintritt;
wenn die Ermüdung eintritt, Modifizieren des ersten Satzes von Parametern.

2. Verfahren nach Anspruch 1, wobei der Materialeigenschaftsverbesserungsprozess ein Laserschockstrahlprozess ist, durch den eine oder mehrere Schockwellen erzeugt werden, die sich bis zu einer vierten Tiefe (14) von der Kante (11) in die Schaufel (10) erstrecken, und wobei die dritte Tiefe (21) flacher ist als die vierte Tiefe.

3. Verfahren nach Anspruch 1 oder 2, wobei die Schaufel (10) eine Rotorschaufel einer Turbine eines Gasturbinentriebwerks ist.

4. Verfahren nach Anspruch 1 oder 2, wobei die Schaufel (10) eine Rotorschaufel eines Verdichters eines Gasturbinentriebwerks ist.

5. Verfahren nach Anspruch 1 oder 2, wobei der Materialeigenschaftsverbesserungsprozess ein Laserschockstrahlprozess ist, der ferner Folgendes umfasst:
wenn kein Materialversagen eintritt, bevor die erste vorbestimmte Anzahl an Zyklen ausgeführt wurde, Beschichten der Kante und der ersten Einkerbung (15) mit Material, das gegenüber dem einzigen Laserstrahl durchlässig ist;
wenn kein Materialversagen eintritt, Beschichten der Kante (11) und der zweiten Einkerbung (18) mit Material, das gegenüber dem einzigen Laserstrahl durchlässig ist; und
wenn kein Materialversagen eintritt, Erzeugen einer S-N-Krümmung, wobei die zweite Tiefe (17) tiefer als die erste Tiefe (16) ist und die dritte Tiefe (21) tiefer als die zweite Tiefe (17) ist.

6. Verfahren nach Anspruch 5, wobei Tests der hochzyklischen Ermüdung für zumindest 10⁷ Zyklen durchgeführt werden.

7. Verfahren nach Anspruch 5, wobei Tests der hochzyklischen Ermüdung für zumindest 10⁸ Zyklen durchgeführt werden.

8. Verfahren nach Anspruch 5, wobei durch den Laserschockstrahlprozess eine oder mehrere Schockwellen erzeugt werden, die sich bis zu einer vierten Tiefe (14) in die Schaufel (10) erstrecken, und wobei die dritte Tiefe (21) flacher als die vierte Tiefe (14) ist.

9. Verfahren nach Anspruch 5, wobei die erste, zweite und dritte Energie ungefähr gleich sind.

10. Verfahren nach Anspruch 5, wobei die erste, zweite und dritte Impulsdauer ungefähr gleich sind.

11. Verfahren nach Anspruch 5, wobei sich die erste, zweite und dritte Energie unterscheiden.

12. Verfahren nach Anspruch 5, wobei sich die erste, zweite und dritte Impulsdauer unterscheiden.

13. Verfahren nach Anspruch 5, wobei der einzige Laserstrahl, der für den Laserschockstrahlprozess verwendet wird, und der einzige Laserstrahl, der verwendet wird, um die erste, zweite und dritte Einkerbung (15, 18, 22) zu erzeugen, gleich sind.

## Revendications

1. Procédé d'essai d'un bord d'attaque ou de fuite (11) d'une aube de rotor (10), le procédé comprenant :
la fourniture d'un faisceau laser unique ;
la fourniture d'une aube (10) avec un bord (11) devant faire l'objet d'essais et qui a été soumis à un processus d'amélioration des propriétés de matériau, le processus d'amélioration des propriétés de matériau étant réalisé avec un premier ensemble de paramètres utilisant le faisceau laser unique ;
le recouvrement du bord (11) avec un matériau opaque, qui est opaque au faisceau laser unique ;
le placement d'un matériau transparent, qui est transparent au faisceau laser unique, au-dessus du matériau opaque ;
l'application d'une impulsion du faisceau laser unique à un emplacement sur le bord (11) de l'aube (10) à une première puissance pendant une première période d'impulsion pour faire pénétrer une onde de choc dans le bord (11) de l'aube (10) jusqu'à une première profondeur (16), dans lequel le faisceau laser unique traverse le matériau transparent et frappe le matériau opaque ;
le retrait du matériau endommagé par le faisceau laser unique jusqu'à la première profondeur (16), créant ainsi une première encoche (15) dans le bord (11) de l'aube (10) ;
la réalisation d'un essai de fatigue à cycle élevé pendant au moins 10⁶ cycles ou jusqu'à ce qu'un échec se produise ;
si un échec se produit avant qu'un premier nombre prédéterminé de cycles n'ait été effectué, la modification du premier ensemble de paramètres ;
si aucun échec ne se produit avant que le premier nombre prédéterminé de cycles n'ait été effectué, l'application d'une impulsion du faisceau laser unique au niveau de la première encoche (15) et à une deuxième puissance pendant une deuxième période d'impulsion pour faire pénétrer une onde de choc dans le bord de l'aube au niveau de la première encoche (15) jusqu'à une deuxième profondeur (17) ;
le retrait du matériau endommagé par le faisceau laser unique jusqu'à la deuxième profondeur (17) créant ainsi une deuxième encoche (18) dans le bord (11) de l'aube (10) ;
la réalisation d'un essai de fatigue à cycle élevé pendant au moins 10⁶ cycles ou jusqu'à ce qu'un échec se produise ;
si un échec se produit, la modification du premier ensemble de paramètres ;
si aucun échec ne se produit, l'application d'une impulsion du faisceau laser unique au niveau de la deuxième encoche (18) et à une troisième puissance pendant une troisième période d'impulsion pour faire pénétrer une onde de choc dans le bord (11) de l'aube (10) au niveau de la deuxième encoche (18) jusqu'à une troisième profondeur (21) ;
le retrait du matériau endommagé par le faisceau laser unique jusqu'à la troisième profondeur (21) créant ainsi une troisième encoche (22) dans le bord (11) de l'aube (10) ;
la réalisation d'un essai de fatigue à cycle élevé pendant au moins 10⁶ cycles ou jusqu'à ce qu'un échec se produise ;
si un échec se produit, la modification du premier ensemble de paramètres.

2. Procédé selon la revendication 1, dans lequel le processus d'amélioration des propriétés de matériau est un processus de martelage par choc laser qui produit une ou plusieurs ondes de choc qui s'étendent jusqu'à une quatrième profondeur (14) du bord (11) dans l'aube (10), et la troisième profondeur (21) est moins profonde que la quatrième profondeur.

3. Procédé selon la revendication 1 ou 2, dans lequel l'aube (10) est une aube de rotor d'une turbine d'un moteur à turbine à gaz.

4. Procédé selon la revendication 1 ou 2, dans lequel l'aube (10) est une aube de rotor d'un compresseur d'un moteur à turbine à gaz.

5. Procédé selon la revendication 1 ou 2, dans lequel le processus d'amélioration des propriétés de matériau est un processus de martelage par choc laser comprenant en outre :
si aucun échec ne se produit avant que le premier nombre prédéterminé de cycles n'ait été effectué, le recouvrement du bord et de la première encoche (15) avec un matériau qui est transparent au faisceau laser unique ;
si aucun échec ne se produit, le recouvrement du bord (11) et de la deuxième encoche (18) avec un matériau qui est transparent au faisceau laser unique ; et
si aucun échec ne se produit, la création d'une courbe S-N, dans lequel la deuxième profondeur (17) est plus profonde que la première profondeur (16) et la troisième profondeur (21) est plus profonde que la deuxième profondeur (17).

6. Procédé selon la revendication 5, dans lequel les essais de fatigue à cycle élevé sont effectués pendant au moins 10⁷ cycles.

7. Procédé selon la revendication 5, dans lequel les essais de fatigue à cycle élevé sont effectués pendant au moins 10⁸ cycles.

8. Procédé selon la revendication 5, dans lequel le processus de martelage par choc laser produit une ou plusieurs ondes de choc qui s'étendent jusqu'à une quatrième profondeur (14) dans l'aube (10), et la troisième profondeur (21) est moins profonde que la quatrième profondeur (14).

9. Procédé selon la revendication 5, dans lequel les première, deuxième et troisième puissances sont à peu près égales.

10. Procédé selon la revendication 5, dans lequel les première, deuxième et troisième périodes d'impulsion sont à peu près égales.

11. Procédé selon la revendication 5, dans lequel les première, deuxième et troisième puissances sont différentes.

12. Procédé selon la revendication 5, dans lequel les première, deuxième et troisième périodes d'impulsion sont différentes.

13. Procédé selon la revendication 5, dans lequel le faisceau laser unique utilisé pour le processus de martelage par choc laser et le faisceau laser unique utilisé pour créer les première, deuxième et troisième encoches (15, 18, 22) sont identiques.
